# EUROPEAN PATENT SPECIFICATION

(11) **EP 4 671 808 B1**
(45) Date of publication and mention of the grant of the patent: **25.11.2026**
(21) Application number: 24190873.0
(22) Date of filing: 25.07.2024
(51) Int. Cl.: G01S 7/35, G01S 13/34, G01S 13/58

(54) **RADAR APPARATUS**
RADARGERÄT
APPAREIL RADAR

(30) Priority: 27.06.2024 RO 202400376
(43) Date of publication of application: 31.12.2025
(73) Proprietor: NXP B.V., 5656 AG Eindhoven (NL)
(72) Inventor: Rosu, Filip Alexandru, 5656AG Eindhoven (NL); Girdianu, Alexandru, 5656AG Eindhoven (NL); Wu, Ryan Haoyun, 5656AG Eindhoven (NL)
(74) Representative: Schwarzweller, Thomas

(56) References cited:
- US-A1- 20240 111 020
- XU LUZHOU ET AL: "Joint Ambiguity and Migration Mitigation for Enhanced High-Speed Moving Target Detection", 2022 IEEE 95TH VEHICULAR TECHNOLOGY CONFERENCE: (VTC2022-SPRING), IEEE, 19 June 2022 (2022-06-19), pages 1 - 7, XP034176650, DOI: 10.1109/VTC2022-SPRING54318.2022.9860579
- WAN ERIC A: "Finite Impulse Response Neural Networks for Autoregressive Time Series Prediction", 1 December 1992 (1992-12-01), pages 1 - 22, XP093232999, Retrieved from the Internet <URL:https://www.researchgate.net/publication/2677848_Finite_Impulse_Response_Neural_Networks_for_Autoregressive_Time_Series_Prediction> [retrieved on 20241211]

## Description

### Field

The present disclosure relates to a radar apparatus. In particular, it relates to a radar apparatus configured to process reflections of a frequency stepped series of chirps using autoregressive linear prediction.

### Background

Existing examples of radar systems may suffer from limited range or velocity resolution. Providing for efficient processing of radar data to accurately determine the presence of one or more targets and to determine their location and/or velocity is a challenge.

XU LUZHOU ET AL, "Joint Ambiguity and Migration Mitigation for Enhanced High-Speed Moving Target Detection", IEEE VTC2022-Spring, 2022, discloses a Doppler-range processing algorithm for automotive radar that addresses range/Doppler migration and velocity ambiguity in high-speed moving target detection. The processing order involves performing Doppler processing first via FFT across slow-time chirps, followed by range processing via FFT along Doppler migration lines over fast-time samples. The algorithm achieves full range and velocity resolutions with coherent integration gains, with computational complexity comparable to conventional range-Doppler processing, and also introduces a data-adaptive spotlighting algorithm to detect weak targets buried by shadow sidelobes of nearby strong targets with folded velocities.

WAN ERIC A, "Finite Impulse Response Neural Networks for Autoregressive Time Series Prediction", 1992, discloses a neural network architecture that models synapses as Finite Impulse Response (FIR) linear filters to provide dynamic interconnectivity between processing units. The network is applied to chaotic time series prediction, including the Santa Fe Institute Time Series Prediction Competition. Adaptation of the network is achieved through an efficient gradient descent algorithm described as a temporal generalization of the backpropagation algorithm for static networks. The architecture models processes of axonal transport, synaptic modulation, and membrane charge dissipation using FIR filters.

### Summary

According to a first aspect of the present disclosure there is provided a radar apparatus comprising one or more processors configured to:
receive radar data, the radar data comprising a plurality of samples representing the reflections of transmitted radar signals from one or more targets having been received by one or more antennas, the transmitted radar signals comprising a series of frequency stepped chirps;
calculate a Doppler FFT, wherein the Doppler FFT is calculated based on the radar data by determining a Fourier transform of respective first-groups of the samples of the plurality of samples, wherein each first-group comprises a sample from each of the chirps of the series of chirps from a corresponding time-point during the respective chirp, to generate Doppler-FFT data;
perform autoregressive linear prediction, wherein said autoregressive linear prediction is respectively applied to the samples of each chirp as represented in the Doppler-FFT data to generate extrapolated Doppler-FFT data;
perform further processing to determine one or both of a range and velocity of the one or more targets based on the extrapolated Doppler-FFT data.

Thus, the one or more processors of the radar apparatus may comprise a receiver processing chain for processing the received radar signals as described above. The corresponding transmitter may be provided separately.

In one or more embodiments, the radar apparatus comprises an analogue to digital converter configured to:
receive radar signals comprising said reflections received by the one or more antennas; and
generate ADC data comprising digital samples representing the received radar signals, and
wherein the radar data comprising the plurality of samples received by the one or more processors comprises the ADC data and wherein the Doppler FFT is calculated based on the ADC data.

In one or more embodiments, the one or more processors are configured to:
calculate a Range FFT, wherein the Range FFT is calculated based on the extrapolated Doppler-FFT data, by determination of a Fourier transform of second-groups of samples of the plurality of samples, wherein the second-groups comprise the samples respectively representing each of the chirps of the series of chirps, to generate extrapolated Doppler-Range data.

In one or more embodiments, the one or more processors are configured to identify targets based on the extrapolated Doppler-Range data; and
wherein said determination of one or both of the range and velocity of the one or more targets is based on the extrapolated Doppler-Range data.

In one or more embodiments, the one or more processors are configured to calculate a Range FFT, wherein the Range FFT is calculated based on the radar data, by determination of a Fourier transform of second-groups of samples of the plurality of samples, wherein each second-group comprises the samples respectively representing each of the chirps of the series of chirps, to generate Range FFT data; and
wherein said calculation of the Doppler FFT is based on the Range FFT data and comprises performing the Fourier transform of the respective groups of the samples of the Range FFT data wherein each group comprises a sample from each of the chirps of the series of chirps from a corresponding time-point during the respective chirp, to generate Range-Doppler data.

In one or more embodiments, the one or more processors are configured to:
calculate an inverse Range FFT, wherein said inverse Range FFT is calculated by determining an inverse Fourier transform of at least selected samples of the Range-Doppler data to determine, at least in part, Doppler-FFT data; and
   wherein said autoregressive linear prediction is applied to samples to which the inverse Fourier transform has been applied; and
calculate a second Range FFT, wherein the second Range FFT is calculated based on samples to which the autoregressive linear prediction is applied, to generate extrapolated Range-Doppler FFT data.

In one or more embodiments, the one or more processors are configured to identify targets based on the extrapolated Range-Doppler data; and
wherein said determination of one or both of the range and velocity of the one or more targets is based on the extrapolated Range-Doppler data.

In one or more embodiments, the radar apparatus comprises a transmitter wherein the transmitter is configured to transmit the transmitted radar signals comprising the series of frequency stepped chirps.

In one or more embodiments, the transmitter is configured to transmit a radar frame comprising the series of frequency stepped chirps, wherein a first chirp of the frame has a first centre frequency (f₀) and each subsequent chirp of the frame has a centre frequency (f_{c}) that differs from its preceding chirp by a predetermined step frequency (δ_{f}).

Thus, for the subsequent chirps f_{c}= f₀+ n*δ_{f}, wherein n comprises the index number of the subsequent chirp in the frame.

In one or more embodiments, the one or more processors are configured to:
apply a velocity correction algorithm configured to correct for a modulation of a velocity as function of a target's range determined for the one or more targets and caused by the transmission of radar signals comprising the series of frequency stepped chirps.

In one or more embodiments, the autoregressive linear prediction is applied to Doppler FFT data that has not been subjected to a Range FFT.

In one or more embodiments, the series of frequency stepped chirps comprises a first chirp that has a first centre frequency, f₀, and each subsequent chirp of the series of chirps has a centre frequency, f_{c}, that differs from its preceding chirp in the series by a predetermined step frequency, δ_{f}.

In one or more embodiments, the predetermined frequency step and centre frequency are selected such that $\frac{{δ}_{f}}{2 {f}_{0}}$ is less than 10⁻⁴, and preferably less than 10⁻⁵.

In one or more embodiments, the predetermined frequency step is selected such that $0 < {δ}_{f} < \frac{c}{2 {r}_{max}}$ wherein c comprises the speed of light and *rₘₐₓ* comprises a predetermined maximum range of the radar apparatus.

According to a second aspect of the disclosure, we provide a method for processing radar data comprising:
receiving radar data, by one or more processors, the radar data comprising a plurality of samples representing the reflections of transmitted radar signals from one or more targets having been received by one or more antennas, the transmitted radar signals comprising a series of frequency stepped chirps;
calculating a Doppler FFT, wherein the Doppler FFT is calculated based on the radar data by determining a Fourier transform of respective first-groups of the samples of the plurality of samples, wherein each first-group comprises a sample from each of the chirps of the series of chirps from a corresponding time-point during the respective chirp, to generate Doppler-FFT data;
performing autoregressive linear prediction, wherein said autoregressive linear prediction is respectively applied to the samples of each chirp as represented in the Doppler-FFT data to generate extrapolated Doppler-FFT data; and
determining one or both of the range and velocity of the one or more targets based on the extrapolated Doppler-FFT data.

In one or more embodiments, the method comprises:
receiving radar signals comprising said reflections received by the one or more antennas; and
generating ADC data comprising digital samples representing the received radar signals, and
wherein the radar data comprising the plurality of samples received by the one or more processors comprises the ADC data and wherein the Doppler FFT is calculated based on the ADC data.

In one or more embodiments, the method comprises:
calculating a Range FFT, wherein the Range FFT is calculated based on the extrapolated Doppler-FFT data, by determination of a Fourier transform of second-groups of samples of the plurality of samples, wherein the second-groups comprise the samples respectively representing each of the chirps of the series of chirps, to generate extrapolated Doppler-Range data.

In one or more embodiments, the method comprises:
identifying targets based on the extrapolated Doppler-Range data; and
wherein said determining of one or both of the range and velocity of the one or more targets is based on the extrapolated Doppler-Range data.

In one or more embodiments, the method comprises:
calculating a Range FFT, wherein the Range FFT is calculated based on the radar data, by determination of a Fourier transform of second-groups of samples of the plurality of samples, wherein each second-group comprises the samples respectively representing each of the chirps of the series of chirps, to generate Range FFT data; and
wherein said calculating of the Doppler FFT is based on the Range FFT data and comprises performing the Fourier transform of the respective groups of the samples of the Range FFT data wherein each group comprises a sample from each of the chirps of the series of chirps from a corresponding time-point during the respective chirp, to generate Range-Doppler data.

In one or more embodiments, the method comprises:
calculating an inverse Range FFT, wherein said inverse Range FFT is calculated by determining an inverse Fourier transform of at least selected samples of the Range-Doppler data to determine, at least in part, Doppler-FFT data; and
wherein said autoregressive linear prediction is applied to samples to which the inverse Fourier transform has been applied; and
calculating a second Range FFT, wherein the second Range FFT is calculated based on samples to which the autoregressive linear prediction is applied, to generate extrapolated Range-Doppler FFT data.

While the disclosure is amenable to various modifications and alternative forms, specifics thereof have been shown by way of example in the drawings and will be described in detail. It should be understood, however, that other embodiments, beyond the particular embodiments described, and falling within the scope of the appended claims are covered as well.

The above discussion is not intended to represent every example embodiment or every implementation within the scope of the appended claims. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of a radar apparatus;
Figure 2 shows a first example embodiment of the processing performed by the radar apparatus;
Figure 3 shows a second example embodiment of the processing performed by the radar apparatus;
Figure 4 shows a range-Doppler map for an example environment wherein the transmitted radar frame comprising a plurality of chirps is nonfrequency stepped;
Figure 5 shows a range-Doppler map for the example environment wherein the transmitted radar frame comprising a frequency stepped series of chirps; and
Figure 6 shows a flowchart illustrating an example method.

### Detailed Description

The embodiments that follow describe an example radar apparatus configured to process radar data derived from reflected radar signals received by one or more antennas. The radar apparatus may also be configured to provide for transmission of radar signals or, alternatively, the transmission of the radar signals may be performed by a different apparatus. The radar apparatus may be of frequency modulated continuous wave (FMCW) type or of pulsed radar type. The radar apparatus may comprise an automotive radar apparatus, although other use-cases are possible.

Existing examples of linear FMCW radar systems, which provide for transmission of linear frequency modulated (LFM) waveforms, may suffer from limited range resolution, which scales with chirp bandwidth and is limited by the maximum chirp slope which, in turn, is limited by a practically achievable sampling speed of an ADC that receives the reflected radar signals.

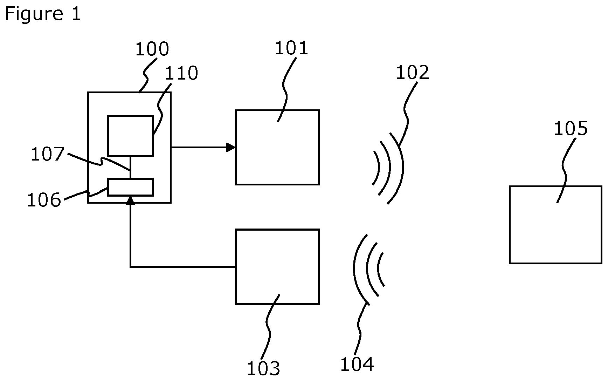

Example figure 1 shows an example radar apparatus 100. In this example, the radar apparatus 100 includes a transmitter 101 comprising one or more transmit antennas for transmitting radar signals 102. Example figure 1 also shows one or more receive antennas 103 configured to receive radar signals 104 comprising reflections of the transmitted radar signals 102 which have reflected from one or more objects 105 in the environment surrounding the transmitter 101. In some examples, the transmit antennas and the receive antennas may be provided by the same antenna array.

The apparatus 100 comprises one or more processors 110 for generating the radar signals 102 and for processing radar data representing the received reflections 104.

The radar apparatus 100, in the present example, comprises an analogue to digital convertor, ADC, 106 configured to sample the reflected radar signals 104 and provide a plurality of digitized samples representative thereof to the one or more processors 110 for processing. The ADC 106 may be part of the radar apparatus 100 or may be part of a different apparatus such that the radar apparatus receives digital samples representing the reflected radar signals 104. The one or more processors 110, optionally in combination with the ADC 106, at least comprise a receiver processing chain for processing the received radar signals 104. The one or more processors 110 may be embodied as one or more processing devices and associated memory loaded with computer program code. In other examples, the one or more processors 110 may comprise hardware and/or software modules for forming the receiver processing chain.

The transmitted radar signals 102 comprising a series of frequency stepped chirps. In the present example, the radar apparatus 100 is configured to transmit a radar frame comprising the frequency stepped series of chirps such that each chirp of the series has a different centre frequency to the preceding chirp in the series. It will be appreciated that the choice of the centre of the chirp to define the frequency of the chirp as a whole is arbitrary, and any corresponding point in the each of the series of chirps may be referenced to define the series of chirps being frequency stepped.

In the present example, a first chirp of the radar frame may have a first centre frequency (*f₀*) and each subsequent chirp of the radar frame may be transmitted with a centre frequency (*f_{c}*) that differs from its preceding chirp in the series of chirps in the radar frame by a predetermined step frequency (*δ_{f}*)*.* Thus, for each subsequent chirps in the radar frame or series of chirps,$fc = f 0 + n . δf$ wherein *n* comprises an index number of the chirp in the series of chirps. *δ_{f}* may comprise a positive or a negative step in frequency. It will be appreciated that each chirp also comprises a signal modulated with (e.g. linearly) increasing or decreasing frequency, as will be familiar to those skilled in the art.

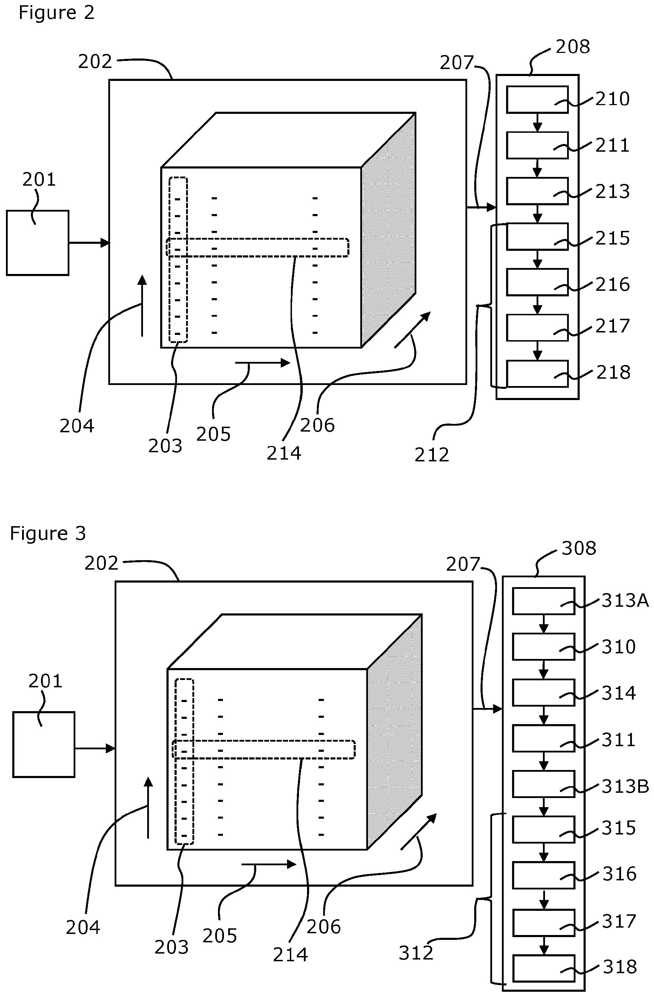

Example figures 2 and 3 show a functional block diagram illustrating a transmission block 201 representing the generation and transmission of the radar signals comprising the series of frequency stepped chirps. Block 202 represents the radar data received by the antennas 103 and sampled by the ADC 106. The radar data comprises a plurality of samples representing the radar frame as reflected from the environment and is shown as a radar cube, which will be familiar to those skilled in the art. Thus, the radar data may be presented to the radar apparatus 100 as a three-dimensional array of samples comprising *Nᵣ* ADC samples for each reflected chirp 203 received (arranged in columns in the present example), wherein the samples of one chirp are shown by a dashed line box 203. A first axis 204 of the cube therefore represents fast-time. The plurality, *N_{c}*, of frequency stepped chirps in the frame are arranged side-by-side in the radar cube. Thus, a second axis 205 of the cube represents slow-time. A third axis 206 of the cube represents the fast-time and slow-time data samples as received by each of the plurality of antennas, *Nₐ*.

Example blocks 208 and 308 represent example processing steps performed by the one or more processors 110.

Arrow 207 represents the radar apparatus 100 being configured to receive the radar data, or radar cube, at input 107 (Figure 1) from the ADC 106.

In general, and common to both embodiments, the one or more processors 110 are configured to calculate a Doppler FFT 210, 310. It will be appreciated that determination of a Doppler FFT, and a Range FFT, are known techniques in radar signal processing. However, in summary, the Doppler FFT is calculated based on the radar data by determining a Fourier transform of respective first-groups of the samples of the plurality of samples, wherein the first-groups comprise a sample from each of the chirps of the series of chirps from a corresponding time-point during the respective chirp. Thus, the samples 214 comprise one of the first-groups and the other rows represent the remainder of the first groups. The output of the calculation of a Doppler FFT comprises Doppler-FFT data. Thus, in terms of the radar cube, the second axis 205, represent the Fourier transform of the samples of each chirp.

Further, the one or more processors 110 are configured to perform autoregressive (AR) linear prediction 211, 311 on range, that is on the samples of one of the chirp, for each of the chirps. Thus, the one or more processors 110 may be configured to apply AR linear prediction to the samples of a first chirp of the series of chirps, apply AR linear prediction to the samples of a second chirp of the series of chirps, and so on, such that AR linear prediction is applied independently to one or more or each of the chirps of the series of chirps. AR (auto regressive) linear prediction, as a mathematical process, is well known and will not be described in detail here. However, in summary, AR linear prediction considers a signal as being an auto regressive process of p poles which can be expressed by the linear equation: x(n) = Sum(x(n-k)*a(k)), where k=1 : p, which is comparable to an infinite impulse response (IIR) filter (considering an all pole model) with p+1 poles, and coefficients a(k), which can be estimated beforehand based on the known samples of input signal x. In general, the AR linear prediction algorithm extrapolates the samples of a single chirp to increase the number of samples therein.

The autoregressive linear prediction is applied to the Doppler-FFT data from block 210, 310. The output of the autoregressive linear prediction is the generation of extrapolated Doppler-FFT data.

The one or more processors 110, and as represented by blocks 212 and 312, are configured to determine the presence of one or more targets and one or both of the range and velocity of the one or more targets 105 based on the extrapolated Doppler-FFT data from block 211, 311.

In the present example embodiments, it has been found that applying autoregressive linear prediction on data that is Doppler FFT processed and derived from radar signals that comprise a frequency-stepped series of chirps provides for improved down-range resolution and therefore improved determination of targets and their range and/or velocity.

Without wishing to be bound by theory, it is considered that although use of frequency stepped waveforms can improve down-range resolution by rotating the range-Doppler response, the amount of down range resolution improvement is limited. Further, sample extrapolation algorithms can be ineffective due to the radar signal potentially being dense in targets. The present example embodiments are advantageous in that radar frames comprising frequency stepped chirp waveforms are used in combination with autoregressive linear prediction. The use of reflected frequency stepped chirps, after Doppler FFT processing, has been found to result in targets of the same velocity, like static targets, being shifted over the velocity spectrum. This, in turn, can lead to a lower number of targets over each range profile such that the number of targets present in each Doppler bin (i.e. after the Doppler FFT is applied) is reduced so that the autoregressive linear prediction can be applied more effectively.

The inventors have identified surprising improvements using the combined frequency stepped series of chirps with autoregressive linear prediction technique described in the example embodiments herein. It is considered that use of the frequency stepped chirps in the radar frame rotates the Range-Doppler spectrum such that the maximum number of targets present in the Doppler bins can be reduced. Next, for each Doppler bin to be processed the extrapolation (autoregressive linear prediction) is applied to generate an extrapolated sample vector for an individual Doppler bin, which has been found to yield better results when there are fewer potential targets in an individual Doppler bin. Thus, the radar apparatus yields more accurate results during subsequent determination of position and velocity of the one or more determined targets.

A Range FFT 213, 313B may be applied based on the extrapolated Doppler-FFT data to generate advantageous extrapolated Range-Doppler data (or Range-Doppler map) for further conventional radar processing. The Range FFT processing will be familiar to those skilled in the art. However, in general, the Range FFT is calculated based on the extrapolated Doppler-FFT data, by determination of a Fourier transform of second-groups (e.g. groups represented by columns 203) of samples of the plurality of samples, wherein each second-group comprises the samples respectively representing each of the chirps of the series of chirps. Thus, the samples 203 comprise one of the second-groups and the other columns represent the remainder of the second groups. The application of the Range FFT generates the extrapolated Doppler-Range data.

We will now describe the two different example embodiments in more detail starting with the embodiment represented in Figure 2.

In this first embodiment, as mentioned, a Doppler FFT, at block 210, is applied to the radar data from the ADC 106 at block 210 yielding Doppler FFT data. As will be understood, the Fourier transformed samples of the Doppler FFT data are arranged in a plurality of Doppler bins. The autoregressive linear prediction is applied, at block 211, to the Doppler FFT data, or, in more detail, to the samples in each Doppler bin or at least Doppler bins meeting one or more criteria. The autoregressive linear prediction is applied on range, that is respectively to the samples of each (or some) of the chirps of the series of chirps. The Range FFT at block 213 is applied based on the extrapolated Doppler-FFT data to yield extrapolated Doppler-Range data.

The blocks 212 comprise block 215 representing the application of a Constant False Alarm Rate (CFAR) algorithm to identify the number of targets in Range-Doppler data, which inherently contains noise, as is conventional. The CFAR algorithm of block 215 in the present example is applied to the extrapolated Doppler-Range data. Thus, the one or more processors 110 are configured to identify targets at block 215 based on the extrapolated Doppler-Range data using a target determination algorithm, an example of which is CFAR. Further, the determination of one or both of the range and velocity of the one or more targets is based on the extrapolated Doppler-Range data.

A peak detection algorithm is applied at block 216. The use of a peak detection algorithm is a known technique but here it is applied based on the extrapolated Doppler-Range data. The exact coordinates - range, velocity - of a target in the extrapolated Doppler-Range data or map is represented by the local maximum spectral power. This estimation can be performed on two dimensions (2D).

The block 217 represents the output of the range and velocity of an identified target, represented as the coordinates in the extrapolated range-doppler map.

The one or more processors are further configured to, as represented by block 218, apply a velocity correction algorithm configured to correct for a modulation of velocity as a function of a target's range, wherein the modulation is caused by the transmission of radar signals comprising the frequency stepped series of chirps. It will be appreciated that the parameters of the velocity correction algorithm are known based on the predetermined frequency step applied to the transmitted signals, as will be explained in more detail below. Thus, the true velocity is now determined for each of the identified targets at block 215.

In the second embodiment represented in Figure 3, it is recognised that many radar apparatuses 100 are preconfigured to determine the Range FFT at block 313A based on the ADC data followed by the Doppler FFT at block 310 or vice versa. However, in the present disclosure, the autoregressive linear prediction is applied to the Doppler FFT data rather than Range-Doppler FFT data.

Accordingly, to summarize, the one or more processors 110 are configured to calculate a Range FFT, at block 313A, wherein the Range FFT is calculated based on the radar data or, in particular, the ADC data. The range FFT is determined by a Fourier transform of second-groups of samples of the plurality of samples, wherein the second-groups 203 comprise samples respectively representing each of the chirps of the series of chirps, to generate Range FFT data. Thus, the samples 203 comprise one of the second-groups and the other columns represent the remainder of the second groups. A Doppler FFT determined at block 310 is based on the Range FFT data and comprises performing the Fourier transform of the respective groups 214 of the samples of the Range FFT data wherein each group comprises a sample from each of the chirps of the series of chirps from a corresponding time-point during the respective chirp, to generate Range-Doppler data.

In order to apply the autoregressive linear prediction, the effect of the Range FFT is reversed by an inverse Range FFT, represented by block 314. In some examples, the inverse Range FFT is applied to all of the Range-Doppler data. However, more efficiently, the one or more processors 110 may be configured to calculate an inverse Range FFT, wherein said inverse Range FFT is calculated by determining an inverse Fourier transform of selected samples of the Range-Doppler data to determine, at least in part, Doppler-FFT data for selected Doppler bins. The selected samples may be determined by evaluating a power distribution over the Doppler bin such as an average power and selecting the bin of the average power exceeds a predetermined threshold. Alternatively, the identification of samples having a value greater than a further predetermined threshold in the Doppler bins may be the criteria for selection. In one example, the selection is done based on the power distribution over the Doppler bins, for instance mean power can be computed for each chirp signal. A larger power is indicative of target(s) presence and identifies the bin for applying AR linear prediction to improve range resolution. On the other hand, a smaller power, such as close to a noise floor, may be indicative of no target presence, so AR linear prediction is unlikely to be beneficial for that bin. Thus, in general, the inverse Range FFT may be applied to the samples of selected doppler bins, wherein the doppler bins comprise the groupings of samples after the Doppler FFT.

The autoregressive linear prediction applied at block 311 is applied to samples, or groups thereof, to which the inverse Fourier transform has been applied.

The Range FFT can then be re-applied at block 313B. Thus, the one or more processors 110 may be configured to calculate a second Range FFT, wherein the second Range FFT is calculated based on samples to which the autoregressive linear prediction is applied, to generate extrapolated Range-Doppler FFT data. In particular, the second Range FFT is applied to the second-groups to which autoregressive linear prediction has been applied.

The processing performed by blocks 212 is also present in the second embodiment, provided by blocks 312. Thus, the second embodiment, likewise, comprises a target determination algorithm such as Constant false alarm rate (CFAR) algorithm block 315; a peak detection algorithm block 316; a range-doppler plot generation block 317; a velocity correction algorithm block 318.

In general, in both embodiments, it will be appreciated that the autoregressive linear prediction is applied to Doppler FFT data that has not been subjected to a Range FFT. In the first embodiment, the Range FFT is determined at a later stage in the processing, after the autoregressive linear prediction. In the second embodiment, the effect of the pre-applied Range FFT is reversed by the inverse Range FFT prior to the application of the autoregressive linear prediction. It is then subsequently reapplied, but on the extrapolated Doppler FFT data, to form the Range-Doppler data/map for further, conventional processing by blocks 232, 312.

We will now consider the effect of the transmission of a frequency stepped series of chirps with the autoregressive linear prediction in more detail.

The derivation of equations for an example comprising frequency-modulated continuous-wave (FMCW) radar when the frequency stepped series of chirps technique is applied ("FS" for brevity) is demonstrated below. The result shows that FS leads to frequency modulation of Doppler frequency, and that two signal components are involved in the modulation: first as function of a respective range of a target and the predetermined step frequency, and second as a quadratic component comprising a function of the respective velocity of the target and the predetermined step frequency. It has been found that this second component may lead to resolution degradation if the predetermined step frequency value is not carefully chosen.

The premise of this derivation is to find out the possible value that the predetermined step frequency (δ*_{f}*) can take with respect to system parameter values, in this case maximum range (*rₘₐₓ*), maximum velocity (*vₘₐₓ*) and central frequency (*f*₀). It will be appreciated that these system parameters may be predetermined for a particular radar apparatus.

The derivation leads to two closed form formulae: one for the maximum step frequency, δ*_{fmax}* as function of *rₘₐₓ* and a preference for δ*_{f}*/2*f*₀ → 0. Experiments have shown that the value for δ*_{f}*/2*f*₀ is smaller than 10⁻⁴ and is preferably the centre frequency and predetermined step frequency are chosen such that δ*_{f}*/2*f*₀ has an upper limit of 10⁻⁵. This has been found to avoid the resolution degradation mentioned above.

The FS technique described herein is defined as adding the predetermined step frequency δ*_{f}* to the central frequency, leading to a new central frequency as follows: ${f}_{0}^{′} \left(m\right) = {f}_{0} + \left(m-1\right) {δ}_{f}$, where m here represents the chirp's index value in the series of chirps, and can take values from 1 to the maximum number of chirps in one single radar frame.

### Signal Model

Analog equation for a complex frequency beat sinusoidal signal, with amplitude *A* beat frequency *f_{b}* and phase ϕ is: $s \left(t\right) = A \left(t\right) exp \left(j\left(2π{f}_{b}t-ϕ\right)\right)$ (1)

If a moving target is considered, with radial velocity, *vᵣ*, and range r Eq. (1) becomes: $s \left(t\right) = A \left(t\right) exp \left(j2π\left(\frac{B}{{T}_{c}}\frac{2}{c}\left(r+{v}_{r}t\right)t-\frac{2}{λ}\left(r+{v}_{r}t\right)\right)\right)$ (2)

Where the meaning of the notations for the system parameters and others used below are:
*m* = *chirp's bin index*
*n* = *range's bin index*
*T_{c}*[*s*] = acquisition *time period*
*Tₛ*[*s*] = *sampling time*
*B*[*Hz*] = *chirp bandwidth*
*c*[*m*/*s*] = *speed of light*
*f*₀[*Hz*] = *central frequency*
δ*_{f}*[*Hz*] = *drifting stepping frequency*
*PRF*[*Hz*] *= Pulse Repetition Frequency*

Since the FS technique implies changing of the central frequency values with every new chirp, the effect can be expressed as function of wavelength, λ = c/(*f*₀ *+* δ*_{f}m*), and be replaced in Eq.(2). Moreover, if we consider that the Radar Cross Section of a target is constant over the acquisition time of the chirps of the radar signal, we can consider its amplitude as constant, without detrimental effects to our derivation. Thus, the discrete form of Eq. (2) is: $s \left(n, m\right) \approx Aexp \left(j2π\left(\begin{matrix}\frac{B}{{T}_{c}} \frac{2}{c} \left(r+{v}_{r}{T}_{c}m\right) {T}_{s} n \\ - \frac{2}{c} \left(r+{v}_{r}{T}_{c}m\right) \left({f}_{0}+{δ}_{f}m\right)\end{matrix}\right)\right)$ (3) *s(n, m)* is made of 2 terms, denoted *s*¹(*n, m*) and *s*²(*m*): ${s}^{1} \left(n, m\right) = Aexp \left(j2π\left(\frac{B}{{T}_{c}}\frac{2}{c}\left(r+{v}_{r}{T}_{c}m\right){T}_{s}n\right)\right)$ (4)

Eq. (4) contains range information and range migration factor, as an effect of the target's non-zero velocity. ${s}^{2} \left(m\right) = exp \left(-j2π\frac{2}{c}\left(r+{v}_{r}{T}_{c}m\right)\left({f}_{0}+{δ}_{f}m\right)\right)$ (5)

Eq.(5) contains information as: range phase, Doppler frequency, and an extra component called a *modulation component,* which is an effect of the FS technique. The latter component, which contains *δ_{f}* only, is separately displayed in the following equation: *s*_{δ*f*}(*m*): ${s}_{δf} \left(m\right) = exp \left(-j2π\frac{2}{c}\left(r+{v}_{r}{T}_{c}m\right){δ}_{f}m\right)$ (6)

Eq. (6) is made of other two components: the 1^{st} one provides the modulation frequency as function of range and step frequency, (*r, δ_{f}*), over Doppler domain: ${s}_{δf}^{1} \left(m\right) = exp \left(-j2{πδ}_{f}\frac{2}{c}rm\right)$ (7) **and the** 2^{nd} one is made of a quadratic argument, as function of *m*²: ${{s}^{2}}_{δf} \left(m\right) = exp \left(-j2{πδ}_{f}\left(\frac{2}{c}{v}_{r}{T}_{c}m\right)m\right)$ (8)

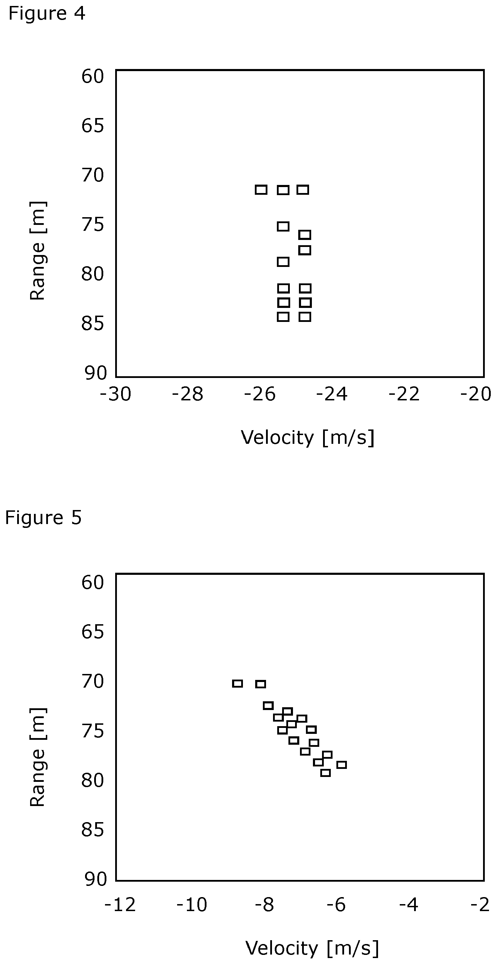

The main index letters of Eq. (7) are chirp index term *m* and *n* index term, which comes from *r =* Δ*r * n* , (*n =* 0: *Nₛ -* 1), where *r* represents target's distance relative to the radar's position. This leads to the modulation frequency *δ_{f} * n,* thus the larger the target's range, the larger is the modulation frequency, explaining why after FS and Doppler FFT, the targets are rearranged on a diagonal line, as shown in Figure 5. It will be appreciated that example Figure 4 shows an example range-doppler map without the FS technique and example Figure 5 shows the range-doppler map with the FS technique applied.

Eq (8) represent a chirp signal, which has zero central frequency for *m* = *-N_{c}*/2: *N_{c}*/2 *-* 1. However, when its bandwidth is large enough, it has been found to lead to signal resolution degradation. However, it has also been found that this is less likely to happen if a normalized frequency, ${δ}_{f} \frac{2 {v}_{r} {T}_{c}}{c}$, is close to zero.

Normalized frequencies for Eq. (7) ( ${f}_{n}^{1}$) and respectively, Eq.(8) ( ${f}_{n}^{2}$), are: ${f}_{n}^{1} = {δ}_{f} \frac{2}{c} r$ ${f}_{n}^{2} = {δ}_{f} \frac{2 {v}_{r} {T}_{c}}{c}$

The following limits are derived based on the formulae for these two normalized frequencies. It has been found that it is preferable for ${f}_{n}^{1}$ to respect the limits of Eq. (9), to see the effect of the modulation at all range values, including the maximum range value. $\begin{matrix}0 < {δ}_{f} \frac{2}{c} r < 1 \\ 0 < {δ}_{f} < \frac{c}{2 {r}_{max}}\end{matrix}$ (9)

Secondly, it has been found that it is preferable for ${f}_{n}^{2}$ to be close to zero, to reduce the likelihood of resolution degradation. The ${v}_{r} = {v}_{r}^{max}$ case is considered for deriving a closed form formula for the worst case scenario, see the three steps derived equation: $\begin{matrix}{δ}_{f} \frac{2}{c} {v}_{r}^{max} {T}_{c} \to 0 \\ {δ}_{f} \frac{2}{c} \frac{c}{4 {f}_{0} {T}_{c}} {T}_{c} \to 0 \\ \frac{{δ}_{f}}{2 {f}_{0}} \to 0\end{matrix}$ (10)

Eq. (10) represents an example limit to mitigate against a risk of resolution degradation.

We will now describe the velocity correction algorithm in more detail.

It will be appreciated that the velocity of each of the one or more targets is modulated by a modulation frequency that correspond with the predetermined step frequency and targets range value. Thus, the velocity correction algorithm is configured to determine the true velocity.

In order to estimate *true velocity* value, *vᵣ* , one needs to know the *modulated* velocity, ${v}_{r}^{M}$, (velocity after FS is applied) and the range value, *r*, that can be estimated from the range-Doppler map.

Formula for *true velocity* is: $\begin{matrix}{v}_{r} = - \frac{λ}{2} PRF {f}_{n} \\ = - \frac{λ}{2} PRF \left(mod\left({f}_{n}^{M}+0.5-{f}_{n}^{m},1\right)-0.5\right) \\ = - \frac{λ}{2} PRF \left(\begin{matrix}mod \left(\frac{2 {v}_{r}^{M}}{λ PRF}+0.5-\left(-{δ}_{f}r2Δ/c\right),1\right) \\ - 0.5\end{matrix}\right)\end{matrix}$ (11a)

Where *mod* here represents the modulus after division, for instance *mod*(*x,y*) returns: $mod \left(x, y\right) = x - floor \left(x/y\right) ∗ y$ $if y ≅ 0$
λ = wavelength
*PRF = pulse repetition frequency =* 1/*T_{c}*

More details are provided below:
Next, Eq. (11) shows the modulation signal as function of range index *n*, and chirp index m: ${s}_{δf}^{1} \left(m, n\right) = exp \left(-j2{πδ}_{f}n\frac{2}{c}Δrm\right)$ (11)

Considering *tₛ* = 2Δ*r*/*c,* the normalized *modulation* frequency can be written as: ${f}_{n}^{m} = - {δ}_{f} n 2 Δ r / c = - {δ}_{f} {nt}_{s}$ (12)

The reason for minus sign in Eq. (12) is because velocity and frequency have opposite sign due to a negative sign in front of the equation for a plane wave.

Some notations that are used here:
${f}_{n}^{m}$ = *normalized modulation frequency* (estimated based on target's range)
${f}_{n}^{M}$ = *normalized modulated Doppler frequency* (derived from ${v}_{r}^{M}$)
${v}_{r}^{M}$ *= radial modulated velocity* (estimated on spectrum)
*fₙ* = (*true*) *normalized Doppler frequency* (unknown)
*vᵣ* = (*true*) *radial velocity* (unknown)

General equation for the radial velocity as function of frequency is: ${v}_{r} = \frac{λ}{2} PRFf$ (13)

Which leads to the formula for the *modulated* frequency ${f}_{n}^{M}$): ${f}_{n}^{M} = \frac{2 {v}_{r}^{M}}{λ PRF}$ (14) wherein ${v}_{r}^{M}$ is the radial velocity estimated after FS is applied.${f}_{n}^{M}$ (normalized modulated Doppler frequency) and ${f}_{n}^{m}$, Eq. (12), leads to determination of the true normalized Doppler frequency: ${f}_{n} = mod \left({f}_{n}^{M}+0.5-{f}_{n}^{m},1\right) - 0.5$ (15)

Which, based on Eq. (13), gives true radial velocity: ${v}_{r} = - \frac{λ}{2} PRF {f}_{n}$ (16)

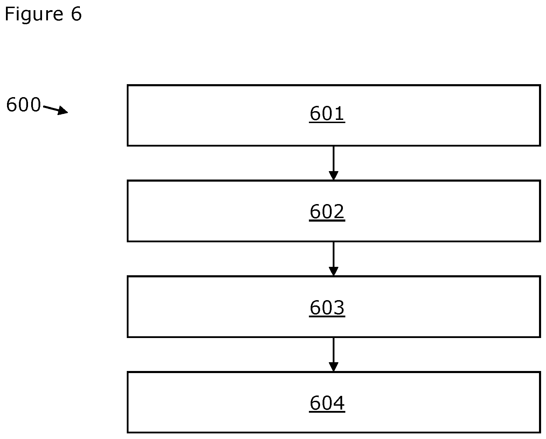

Figure 6 shows a flowchart illustrating an example embodiment of a method for processing radar data comprising:
receiving radar data 601, by one or more processors 110, the radar data comprising a plurality of samples representing the reflections of transmitted radar signals from one or more targets having been received by one or more antennas, the transmitted radar signals comprising a series of frequency stepped chirps;
calculating a Doppler FFT 602, wherein the Doppler FFT is calculated based on the radar data by determining a Fourier transform of respective first-groups of the samples of the plurality of samples, wherein each first-group comprises the samples respectively representing each of the chirps of the series of chirps, to generate Doppler-FFT data;
performing autoregressive linear prediction 603, wherein said autoregressive linear prediction is applied to the Doppler-FFT data to generate extrapolated Doppler-FFT data; and
determining 604 one or both of the range and velocity of the one or more targets based on the extrapolated Doppler-FFT data.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computerreadable or computer-usable storage media or mediums. Such computerreadable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

## Claims

1. A radar apparatus (100) comprising one or more processors (110) configured to:
receive radar data, the radar data comprising a plurality of samples representing the reflections of transmitted radar signals from one or more targets (105) having been received by one or more antennas (103), the transmitted radar signals comprising a series of frequency stepped chirps;
calculate a Doppler FFT (210, 310), wherein the Doppler FFT is calculated based on the radar data by determining a Fourier transform of respective first-groups of the samples of the plurality of samples, wherein each first-group comprises a sample from each of the chirps of the series of chirps from a corresponding time-point during the respective chirp, to generate Doppler-FFT data;
perform autoregressive linear prediction (211, 311), wherein said autoregressive linear prediction is respectively applied to the samples of each chirp as represented in the Doppler-FFT data to generate extrapolated Doppler-FFT data;
perform further processing to determine one or both of a range and velocity of the one or more targets based on the extrapolated Doppler-FFT data.

2. The radar apparatus of any preceding claim, comprising an analogue to digital converter (106) configured to:
receive radar signals comprising said reflections received by the one or more antennas; and
generate ADC data comprising digital samples representing the received radar signals, and
wherein the radar data comprising the plurality of samples received by the one or more processors comprises the ADC data and wherein the Doppler FFT is calculated based on the ADC data.

3. The radar apparatus of any preceding claim, wherein the one or more processors are configured to:
calculate a Range FFT, wherein the Range FFT is calculated based on the extrapolated Doppler-FFT data, by determination of a Fourier transform of second-groups of samples of the plurality of samples, wherein the second-groups comprise the samples respectively representing each of the chirps of the series of chirps, to generate extrapolated Doppler-Range data.

4. The radar apparatus of claim 3, wherein the one or more processors are configured to identify targets based on the extrapolated Doppler-Range data; and
wherein said determination of one or both of the range and velocity of the one or more targets is based on the extrapolated Doppler-Range data.

5. The radar apparatus of claims 1 or 2, wherein the one or more processors are configured to calculate a Range FFT, wherein the Range FFT is calculated based on the radar data, by determination of a Fourier transform of second-groups of samples of the plurality of samples, wherein each second-group comprises the samples respectively representing each of the chirps of the series of chirps, to generate Range FFT data; and
wherein said calculation of the Doppler FFT is based on the Range FFT data and comprises performing the Fourier transform of the respective groups of the samples of the Range FFT data wherein each group comprises a sample from each of the chirps of the series of chirps from a corresponding time-point during the respective chirp, to generate Range-Doppler data.

6. The radar apparatus of claim 5, wherein the one or more processors are configured to:
calculate an inverse Range FFT, wherein said inverse Range FFT is calculated by determining an inverse Fourier transform of at least selected samples of the Range-Doppler data to determine, at least in part, Doppler-FFT data; and
wherein said autoregressive linear prediction is applied to samples to which the inverse Fourier transform has been applied; and
calculate a second Range FFT, wherein the second Range FFT is calculated based on samples to which the autoregressive linear prediction is applied, to generate extrapolated Range-Doppler FFT data.

7. The radar apparatus of claim 6, wherein the one or more processors are configured to identify targets based on the extrapolated Range-Doppler data; and
wherein said determination of one or both of the range and velocity of the one or more targets is based on the extrapolated Range-Doppler data.

8. The radar apparatus of any preceding claim, comprising a transmitter (101) wherein the transmitter is configured to transmit the transmitted radar signals comprising the series of frequency stepped chirps.

9. The radar apparatus of claim 8, wherein the transmitter is configured to transmit a radar frame comprising the series of frequency stepped chirps, wherein a first chirp of the frame has a first centre frequency (f₀) and each subsequent chirp of the frame has a centre frequency (f_{c}) that differs from its preceding chirp by a predetermined step frequency (δ_{f}).

10. The radar apparatus of any preceding claim, wherein the one or more processors are configured to:
apply a velocity correction algorithm configured to correct for a modulation of a velocity as function of a target's range determined for the one or more targets and caused by the transmission of radar signals comprising the series of frequency stepped chirps.

11. The radar apparatus of any preceding claim, wherein the autoregressive linear prediction is applied to Doppler FFT data that has not been subjected to a Range FFT.

12. The radar apparatus of any one of claims 1 to 7, wherein the series of frequency stepped chirps comprises a first chirp that has a first centre frequency, f₀, and each subsequent chirp of the series of chirps has a centre frequency, f_{c}, that differs from its preceding chirp in the series by a predetermined step frequency, δ_{f}.

13. The radar apparatus of claim 12, wherein $\frac{{δ}_{f}}{2 {f}_{0}}$ is less than 10⁻⁴, and preferably less than 10⁻⁵.

14. The radar apparatus of claim 12 or 13, wherein $0 < {δ}_{f} < \frac{c}{2 {r}_{max}}$ wherein *c* comprises the speed of light and *rₘₐₓ* comprises a predetermined maximum range of the radar apparatus.

15. A method for processing radar data comprising:
receiving (601) radar data, by one or more processors (110), the radar data comprising a plurality of samples representing the reflections of transmitted radar signals from one or more targets (105) having been received by one or more antennas (103), the transmitted radar signals comprising a series of frequency stepped chirps;
calculating (602) a Doppler FFT, wherein the Doppler FFT is calculated based on the radar data by determining a Fourier transform of respective first-groups of the samples of the plurality of samples, wherein each first-group comprises a sample from each of the chirps of the series of chirps from a corresponding time-point during the respective chirp, to generate Doppler-FFT data;
performing (603) autoregressive linear prediction, wherein said autoregressive linear prediction is respectively applied to the samples of each chirp as represented in the Doppler-FFT data to generate extrapolated Doppler-FFT data; and
determining (604) one or both of the range and velocity of the one or more targets based on the extrapolated Doppler-FFT data.

## Patentansprüche

1. Radarvorrichtung (100), die einen oder mehrere Prozessoren (110) umfasst, die zu Folgendem konfiguriert sind:
Empfangen von Radardaten, wobei die Radardaten eine Vielzahl von Abtastwerten umfassen, die die Reflexionen von gesendeten Radarsignalen von einem oder mehreren Zielen (105) repräsentieren, die durch eine oder mehrere Antennen (103) empfangen wurden, wobei die gesendeten Radarsignale eine Reihe von frequenzgestuften Chirps umfassen;
Berechnen einer Doppler-FFT (210, 310), wobei die Doppler-FFT auf der Grundlage der Radardaten berechnet wird, indem eine Fourier-Transformation jeweiliger erster Gruppen der Vielzahl von Abtastwerten ermittelt wird, wobei jede erste Gruppe einen Abtastwert aus jedem der Chirps der Chirp-Reihe zu einem entsprechenden Zeitpunkt während des jeweiligen Chirps umfasst, um Doppler-FFT-Daten zu erzeugen;
Durchführen einer autoregressiven linearen Vorhersage (211, 311), wobei die autoregressive lineare Vorhersage jeweils auf die Abtastwerte jedes Chirps angewendet wird, wie in den Doppler-FFT-Daten dargestellt, um extrapolierte Doppler-FFT-Daten zu erzeugen;
Durchführen einer weiteren Verarbeitung, um einen Bereich und/oder eine Geschwindigkeit des einen oder der mehreren Ziele basierend auf den extrapolierten Doppler-FFT-Daten zu bestimmen.

2. Radarvorrichtung nach einem der vorhergehenden Ansprüche, die einen Analog-Digital-Wandler (106) umfasst, der zu Folgendem konfiguriert ist:
Empfangen von Radarsignalen, die die Reflexionen umfassen, die durch die eine oder die mehreren Antennen empfangen werden; und
Erzeugen von ADC-Daten, die digitale Abtastungen umfassen, die die empfangenen Radarsignale repräsentieren, und
wobei die Radardaten, die die Vielzahl von Abtastungen umfassen, die durch den einen oder die mehreren Prozessoren empfangen werden, die ADC-Daten umfassen, und wobei die Doppler-FFT basierend auf den ADC-Daten berechnet wird.

3. Radarvorrichtung nach einem der vorhergehenden Ansprüche, wobei der eine oder die mehreren Prozessoren zu Folgendem konfiguriert sind:
Berechnen einer Range-FFT, wobei die Range-FFT basierend auf den extrapolierten Doppler-FFT-Daten berechnet wird, durch Bestimmen einer Fourier-Transformation von zweiten Gruppen von Abtastwerten der Vielzahl von Abtastwerten, wobei die zweiten Gruppen die Abtastwerte umfassen, die jeweils jeden der Chirps der Reihe von Chirps repräsentieren, um extrapolierte Doppler-Range-Daten zu erzeugen.

4. Radarvorrichtung nach Anspruch 3, wobei der eine oder die mehreren Prozessoren dazu ausgelegt sind, Ziele basierend auf den extrapolierten Doppler-Range-Daten zu identifizieren; und
wobei die Bestimmung der Entfernung und/oder der Geschwindigkeit des einen oder der mehreren Ziele auf den extrapolierten Doppler-Range-Daten basiert.

5. Radarvorrichtung nach Anspruch 1 oder 2, wobei der eine oder die mehreren Prozessoren dazu ausgelegt sind, eine Range-FFT zu berechnen, wobei die Range-FFT basierend auf den Radardaten berechnet wird, durch Bestimmen einer Fourier-Transformation von zweiten Gruppen von Abtastwerten der Vielzahl von Abtastwerten, wobei jede zweite Gruppe die Abtastwerte umfasst, die jeweils jeden der Chirps der Reihe von Chirps repräsentieren, um Range-FFT-Daten zu erzeugen; und
wobei die Berechnung der Doppler-FFT auf den Range-FFT-Daten basiert und das Durchführen der Fourier-Transformation der jeweiligen Gruppen der Abtastwerte der Range-FFT-Daten umfasst, wobei jede Gruppe eine Probe von jedem der Chirps der Serie von Chirps von einem entsprechenden Zeitpunkt während des jeweiligen Chirps umfasst, um Range-Doppler-Daten zu erzeugen.

6. Radarvorrichtung nach Anspruch 5, wobei der eine oder die mehreren Prozessoren zu Folgendem konfiguriert sind:
Berechnen einer Inverse-Range-FFT, wobei die Inverse-Range-FFT durch Bestimmen einer inversen Fourier-Transformation von mindestens ausgewählten Abtastwerten der Range-Doppler-Daten berechnet wird, um mindestens teilweise Doppler-FFT-Daten zu bestimmen; und
wobei die autoregressive lineare Vorhersage auf Abtastungen angewendet wird, auf die die inverse Fourier-Transformation angewendet wurde; und
Berechnen einer zweiten Range-FFT, wobei die zweite Range-FFT basierend auf Abtastwerten berechnet wird, auf die die autoregressive lineare Vorhersage angewendet wird, um extrapolierte Range-Doppler-FFT-Daten zu erzeugen.

7. Radarvorrichtung nach Anspruch 6, wobei der eine oder die mehreren Prozessoren dazu ausgelegt sind, Ziele basierend auf den extrapolierten Range-Doppler-Daten zu identifizieren; und
wobei die Bestimmung der Entfernung und/oder der Geschwindigkeit des einen oder der mehreren Ziele auf den extrapolierten Range-Doppler-Daten basiert.

8. Radarvorrichtung nach einem der vorhergehenden Ansprüche, die einen Sender (101) umfasst, wobei der Sender dazu ausgelegt ist, die gesendeten Radarsignale, die die Reihe von frequenzgestuften Chirps umfassen, zu übertragen.

9. Radarvorrichtung nach Anspruch 8, wobei der Sender dazu ausgelegt ist, einen Radarrahmen zu senden, der die Reihe von frequenzgestuften Chirps umfasst, wobei ein erster Chirp des Rahmens eine erste Mittenfrequenz (f₀) aufweist und jeder nachfolgende Chirp des Rahmens eine Mittenfrequenz (f_{c}) aufweist, die sich von seinem vorhergehenden Chirp um eine vorbestimmte Schrittfrequenz (δ_{f}) unterscheidet.

10. Radarvorrichtung nach einem der vorhergehenden Ansprüche, wobei der eine oder die mehreren Prozessoren zu Folgendem konfiguriert sind:
Anwenden eines Geschwindigkeitskorrekturalgorithmus, der dazu ausgelegt ist, eine Modulation einer Geschwindigkeit als Funktion eines Zielbereichs zu korrigieren, der für das eine oder die mehreren Ziele bestimmt wird und durch die Übertragung von Radarsignalen verursacht wird, die die Reihe von frequenzgestuften Chirps umfassen.

11. Radarvorrichtung nach einem der vorhergehenden Ansprüche, wobei die autoregressive lineare Vorhersage auf Doppler-FFT-Daten angewendet wird, die nicht einer Range-FFT unterzogen wurden.

12. Radarvorrichtung nach einem der Ansprüche 1 bis 7, wobei die Reihe von frequenzgestuften Chirps einen ersten Chirp umfasst, der eine erste Mittenfrequenz f₀ aufweist und jeder nachfolgende Chirp der Reihe von Chirps eine Mittenfrequenz f_{c} aufweist, die sich von seinem vorhergehenden Chirp in der Reihe um eine vorbestimmte Schrittfrequenz δ_{f} unterscheidet.

13. Radarvorrichtung nach Anspruch 12, wobei $\frac{{δ}_{f}}{2 {f}_{0}}$ weniger als 10⁻⁴ und vorzugsweise weniger als 10⁻⁵ ist.

14. Radarvorrichtung nach Anspruch 12 oder 13, wobei $0 < {δ}_{f} < \frac{c}{2 {r}_{max}}$ , wobei c die Lichtgeschwindigkeit umfasst und rₘₐₓ eine vorbestimmte maximale Reichweite der Radarvorrichtung umfasst.

15. Verfahren zum Verarbeiten von Radardaten, das Folgendes umfasst:
Empfangen (601) von Radardaten durch einen oder mehrere Prozessoren (110), wobei die Radardaten eine Vielzahl von Abtastwerten umfassen, die die Reflexionen von gesendeten Radarsignalen von einem oder mehreren Zielen (105) repräsentieren, die durch eine oder mehrere Antennen (103) empfangen wurden, wobei die gesendeten Radarsignale eine Reihe von frequenzgestuften Chirps umfassen;
Berechnen (602) einer Doppler-FFT, wobei die Doppler-FFT basierend auf den Radardaten berechnet wird, indem eine Fourier-Transformation jeweiliger erster Gruppen der Abtastwerte der Vielzahl von Abtastwerten bestimmt wird, wobei jede erste Gruppe einen Abtastwert von jedem der Chirps der Reihe von Chirps von einem entsprechenden Zeitpunkt während des jeweiligen Chirps umfasst, um Doppler-FFT-Daten zu erzeugen;
Durchführen (603) einer autoregressiven linearen Vorhersage, wobei die autoregressive lineare Vorhersage jeweils auf die Abtastungen jedes Chirps angewendet wird, wie in den Doppler-FFT-Daten dargestellt, um extrapolierte Doppler-FFT-Daten zu erzeugen; und
Bestimmen (604) der Entfernung und/oder der Geschwindigkeit des einen oder der mehreren Ziele basierend auf den extrapolierten Doppler-FFT-Daten.

## Revendications

1. Appareil radar (100) comprenant un ou plusieurs processeurs (110) configurés pour :
recevoir des données radar, les données radar comprenant une pluralité d'échantillons représentant les réflexions de signaux radar transmis en provenance d'une ou de plusieurs cibles (105) et ayant été reçues par une ou plusieurs antennes (103), les signaux radar transmis comprenant une série de chirps à fréquences échelonnées ; calculer une FFT Doppler (210, 310), où la FFT Doppler est calculée à partir des données radar par détermination d'une transformée de Fourier de premiers groupes respectifs des échantillons de la pluralité d'échantillons, où chaque premier groupe comprend un échantillon de chacun des chirps de la série de chirps à partir d'un temps correspondant pendant le chirp respectif, pour générer des données FFT Doppler ;
effectuer une prédiction linéaire autorégressive (211, 311), où ladite prédiction linéaire autorégressive est appliquée respectivement aux échantillons de chaque chirp tel que représenté dans les données FFT Doppler pour générer des données FFT Doppler extrapolées ;
effectuer un traitement supplémentaire pour déterminer l'une ou les deux parmi la distance et la vitesse des une ou plusieurs cibles sur la base des données FFT Doppler extrapolées.

2. Appareil radar selon l'une quelconque des revendications précédentes, comprenant un convertisseur analogique-numérique (106) configuré pour :
recevoir des signaux radar comprenant lesdites réflexions reçues par les une ou plusieurs antennes ; et
générer des données ADC comprenant des échantillons numériques représentant les signaux radar reçus, et
où les données radar comprenant la pluralité d'échantillons reçus par les un ou plusieurs processeurs comprennent les données ADC et où la FFT Doppler est calculée sur la base des données ADC.

3. Appareil radar selon l'une quelconque des revendications précédentes, dans lequel les un ou plusieurs processeurs sont configurés pour :
calculer une FFT de distance, la FFT de distance étant calculée sur la base des données FFT Doppler extrapolées, par détermination d'une transformée de Fourier de deuxièmes groupes d'échantillons de la pluralité d'échantillons, les deuxièmes groupes comprenant les échantillons représentant respectivement chacun des chirps de la série de chirps, pour générer des données Doppler-distance extrapolées.

4. Appareil radar selon la revendication 3, dans lequel les un ou plusieurs processeurs sont configurés pour identifier des cibles sur la base des données Doppler-distance extrapolées ; et
où ladite détermination de l'une ou des deux parmi la distance et la vitesse des une ou plusieurs cibles est basée sur les données extrapolées Doppler-distance.

5. Appareil radar selon les revendications 1 ou 2, dans lequel les un ou plusieurs processeurs sont configurés pour calculer une FFT de distance, où la FFT de distance est calculée sur la base des données radar, par détermination d'une transformée de Fourier de deuxièmes groupes d'échantillons de la pluralité d'échantillons, où chaque deuxième groupe comprend les échantillons représentant respectivement chacun des chirps de la série de chirps, pour générer des données de FFT de distance ; et
où ledit calcul de la FFT Doppler est basé sur les données de FFT de distance et comprend l'exécution de la transformée de Fourier des groupes respectifs des échantillons des données de FFT de distance, chaque groupe comprenant un échantillon de chacun des chirps de la série de chirps à partir d'un point temporel correspondant pendant le chirp respectif, pour générer des données distance-Doppler.

6. Appareil radar selon la revendication 5, dans lequel les un ou plusieurs processeurs sont configurés pour :
calculer une FFT de distance inverse, ladite FFT de distance inverse étant calculée en déterminant une transformée de Fourier inverse d'au moins des échantillons sélectionnés des données distance-Doppler afin de déterminer, au moins en partie, des données FFT Doppler ; et
où ladite prédiction linéaire autorégressive est appliquée à des échantillons auxquels a été appliquée la transformée de Fourier inverse ; et
calculer une deuxième FFT de distance, la deuxième FFT de distance étant calculée sur la base d'échantillons auxquels la prédiction linéaire autorégressive est appliquée, afin de générer des données de FFT distance-Doppler extrapolées.

7. Appareil radar selon la revendication 6, dans lequel les un ou plusieurs processeurs sont configurés pour identifier des cibles sur la base des données distance-Doppler extrapolées ; et
où ladite détermination de l'une ou des deux parmi la distance et la vitesse des une ou plusieurs cibles est basée sur les données distance-Doppler extrapolées.

8. Appareil radar selon l'une quelconque des revendications précédentes, comprenant un émetteur (101), l'émetteur étant configuré pour émettre les signaux radar transmis comprenant la série de chirps à fréquences échelonnées.

9. Appareil radar selon la revendication 8, dans lequel l'émetteur est configuré pour émettre une trame radar comprenant la série de chirps à fréquences échelonnées, où un premier chirp de la trame a une première fréquence centrale (f₀) et chaque chirp subséquent de la trame a une fréquence centrale (f_{c}) qui diffère de celle du chirp précédent d'un pas de fréquence prédéterminé (δ_{f}).

10. Appareil radar selon l'une quelconque des revendications précédentes, dans lequel les un ou plusieurs processeurs sont configurés pour :
appliquer un algorithme de correction de vitesse configuré pour corriger la modulation d'une vitesse en fonction de la distance d'une cible déterminée pour les une ou plusieurs cibles et provoquée par la transmission de signaux radar comprenant la série de chirps à fréquences échelonnées.

11. Appareil radar selon l'une quelconque des revendications précédentes, dans lequel la prédiction linéaire autorégressive est appliquée à des données FFT Doppler qui n'ont pas été soumises à une FFT de distance.

12. Appareil radar selon l'une quelconque des revendications 1 à 7, dans lequel la série de chirps à fréquences échelonnées comprend un premier chirp qui a une première fréquence centrale, f₀, et chaque chirp suivant de la série de chirps a une fréquence centrale, f_{c}, qui diffère de celle du chirp précédent dans la série d'un pas de fréquence prédéterminé, δ_{f}.

13. Appareil radar selon la revendication 12, dans lequel $\frac{{δ}_{f}}{2 {f}_{0}}$ est inférieur à 10⁻⁴et de préférence inférieur à 10⁻⁵.

14. Appareil radar selon les revendications 12 ou 13, dans lequel $0 < {δ}_{f} < \frac{c}{2 {r}_{max}}$ où c désigne la vitesse de la lumière et rₘₐₓ désigne la portée maximale prédéterminée de l'appareil radar.

15. Procédé de traitement de données radar comprenant les étapes suivantes :
recevoir (601) des données radar, par un ou plusieurs processeurs (110), les données radar comprenant une pluralité d'échantillons représentant les réflexions de signaux radar transmis en provenance d'une ou de plusieurs cibles (105) et ayant été reçues par une ou plusieurs antennes (103), les signaux radar transmis comprenant une série de chirps à fréquences échelonnées ; calculer (602) une FFT Doppler, où la FFT Doppler est calculée à partir des données radar par détermination d'une transformée de Fourier de premiers groupes respectifs des échantillons de la pluralité d'échantillons, où chaque premier groupe comprend un échantillon de chacun des chirps de la série de chirps à partir d'un temps correspondant pendant le chirp respectif, pour générer des données FFT Doppler ;
effectuer (603) une prédiction linéaire autorégressive, où ladite prédiction linéaire autorégressive est appliquée respectivement aux échantillons de chaque chirp tel que représenté dans les données FFT Doppler pour générer des données FFT Doppler extrapolées ;
déterminer (604) l'une ou des deux parmi la distance et la vitesse des une ou plusieurs cibles sur la base des données extrapolées Doppler-distance.
